# EUROPÄISCHE PATENTANMELDUNG

(11) **EP 1 808 713 A2**
(43) Veröffentlichungstag der Anmeldung: **18.07.2007**
(21) Anmeldenummer: 06000481.9
(22) Anmeldetag: 11.01.2006
(51) Int. Cl.: G01V 3/10

(54) **Verfahren und Vorrichtung zur Detektion von metallischen Gegenständen im Bereich von bei Personenkontrollen zu untersuchenden Personen**

(71) Anmelder: Maier & Fabris GmbH, 72072 Tübingen (DE)
(72) Erfinder: Maier, Hans Jürgen, 72072 Tübingen (DE); Fabris, Hans Jürgen, 72760 Reutlingen (DE)
(74) Vertreter: Kohler Schmid Möbus

(57) **Zusammenfassung**

Verfahren und Vorrichtung zur Detektion von metallischen Gegenständen im Beinbereich von bei Personenkontrollen zu untersuchenden Personen mit zwei sich gegenüber angeordneten Messanordnungen (2, 5), wobei eine Messanordnung (2, 5) zumindest eine Sende- und eine Empfangseinrichtung (3, 4; 6, 7) aufweist und eine Messanordnung (2, 5) wenigstens eine Empfangseinrichtung (4, 7) aufweist, wobei zumindest eine Messung mit einer Sende- und einer Empfangseinrichtung (3, 4; 6, 7) derselben Messanordnung (2, 5) und eine Messung mit einer Sendeeinrichtung (3, 6) einer Messanordnung (2, 5) und einer Empfangseinrichtung (4, 7) der gegenüberliegenden Messanordnung (2, 5) durchgeführt werden.

## Beschreibung

Die Erfindung betrifft ein Verfahren und eine Vorrichtung zur Detektion von metallischen Gegenständen im Beinbereich von bei Personenkontrollen zu untersuchenden Personen.

Schon seit längerer Zeit werden aus Sicherheitsgründen, beispielsweise auf Flughäfen oder bei Großveranstaltungen, wie z. B. Fußballspielen oder Popkonzerten, Personen vor dem Betreten des Flugzeugs oder am Eingang des Veranstaltungsgeländes auf metallische Gegenstände, wie Schusswaffen oder Messer, durchsucht.

Um das sichere Erkennen von zu detektierenden metallischen Gegenständen zu verbessern und gleichzeitig einen falschen Alarm aufgrund von metallischen Bestandteilen der Schuhe oder Kleidung zu vermeiden, wird in der DE 102 21 549 C1 eine Vorrichtung zur Detektion von metallischen Gegenständen im Fuß- und Beinbereich von bei Personenkontrollen zu untersuchenden Personen vorgeschlagen, bei der ein oder mehrere Metalldetektoren am Boden, im Boden oder in Bodennähe so angeordnet sind, dass der Fuß- und Beinbereich jedes Beins getrennt erfasst werden kann.

Aufgabe der vorliegenden Erfindung ist es, ein Verfahren und eine Vorrichtung bereitzustellen, mit denen die Metalldetektion noch zuverlässiger erfolgen kann.

Gelöst wird diese Aufgabe auf ebenso überraschende wie einfache Art und Weise durch ein Verfahren zur Detektion von metallischen Gegenständen im Beinbereich von bei Personenkontrollen zu untersuchenden Personen mit zwei sich gegenüber angeordneten Messanordnungen, wobei eine Messanordnung zumindest eine Sende- und eine Empfangseinrichtung aufweist und eine Messanordnung wenigstens eine Empfangseinrichtung aufweist, wobei zumindest eine Messung mit einer Sende- und einer Empfangseinrichtung derselben Messanordnung und eine Messung mit einer Sendeeinrichtung einer Messanordnung und einer Empfangseinrichtung der gegenüberliegenden Messanordnung durchgeführt werden. Zur automatischen Beinkontrolle von Personen auf gefährliche Metallteile bilden herkömmlicherweise zwei Metalldetektoren eine Gasse, die von der zu prüfenden Person durchschritten wird. Dabei sind zwei unterschiedliche Messverfahren möglich: zum einen ist es denkbar, dass jede Messanordnung als eigenständiges Gerät mit eigener Sende- und Empfangseinrichtung arbeitet. Zum anderen ist es denkbar, dass sich in einer der beiden Messanordnungen die Sendeeinrichtung und in der anderen Messanordnung die Empfangseinrichtung befinden. Bei der ersten denkbaren Vorgehensweise ist die Messempfindlichkeit in unmittelbarer Nähe des Detektors sehr hoch, nimmt aber zur Mitte der Gasse hin stark ab. Bei der zweiten Vorgehensweise ist die Messempfindlichkeit in der gesamten Gasse annähernd gleich, jedoch relativ niedrig. Diese Nachteile werden mit dem erfindungsgemäßen Verfahren zumindest weitestgehend vermieden, da beide Vorgehensweisen miteinander kombiniert werden. Insbesondere können beide Messverfahren abwechselnd in sehr kurzen zeitlichen Abständen durchgeführt werden.

Bei einer vorteilhaften Verfahrensvariante kann daher vorgesehen sein, dass Messungen mit der Sende- und Empfangseinrichtung derselben Messanordnung und mit einer Sendeeinrichtung einer Messanordnung und einer Empfangseinrichtung der gegenüberliegenden Messanordnung abwechselnd durchgeführt werden.

Weiterhin kann vorgesehen sein, dass die Empfangseinrichtung einer Messanordnung abwechselnd mit der Sendeeinrichtung derselben und der gegenüberliegenden Messanordnung zur Durchführung einer Messung aktiviert wird. Beispielsweise können zunächst die Sendeeinrichtung der linken Messanordnung und die Empfangseinrichtung der linken Messanordnung aktiv sein. Dann können die Sendeeinrichtung der linken Messanordnung und die Empfangseinrichtung der rechten Messanordnung aktiv sein. Anschließend können die Sendeeinrichtung der rechten Messanordnung und die Empfangseinrichtung der rechten Messanordnung aktiv sein. Dann wiederum kann die Sendeeinrichtung der rechten Messanordnung und Empfangseinrichtung der linken Messanordnung aktiv sein. Diese Vorgehensweise kann sich zyklisch wiederholen. Es versteht sich, dass um die Messung eines durch die jeweilige Sendeeinrichtung erzeugten Primärfeldes zu vermeiden, zunächst die Sendeeinrichtung aktiv ist und kurz danach mit der Empfangseinrichtung gemessen wird.

Bei einer Zeit und Energie sparenden Verfahrensvariante kann vorgesehen sein, dass mit Empfangseinrichtungen beider Messanordnungen gleichzeitig gemessen wird. Beispielsweise wird zunächst mit der Sendeeinrichtung der linken Messanordnung gesendet und kurz danach (wiederum um die Messung des Primärfeldes zu vermeiden) sowohl mit einer Empfangseinrichtung der linken als auch mit einer Empfangseinrichtung der rechten Messanordnung gemessen wird. Anschließend kann mit der Sendeeinrichtung der rechten Messanordnung gesendet werden und wiederum mit beiden Empfangseinrichtungen gemessen werden. Bei jedem Messzyklus kann somit sendeeinrichtungsseitig mit einer hohen Empfindlichkeit gemessen werden und über die gesamte Breite der Gasse zwischen den Messanordnungen mit einer geringen Messempfindlichkeit gemessen werden. Somit kann vermieden werden, dass Metallteile unerkannt bleiben, die sich in der Mitte der Gasse zwischen den Messanordnungen befinden.

Vorteilhafterweise werden die Messungen ausgewertet und/oder das Messergebnis signalisiert. Die Signalisierung kann dabei akustisch, optisch oder haptisch erfolgen.

Insbesondere kann vorgesehen sein, dass bei einer Messung mit einer Sende- und Empfangseinrichtung derselben Messanordnung das Messergebnis auf oder für die Seite der Messanordnung angezeigt wird,

Bei einer Messung mit einer Sende- und Empfangseinrichtung unterschiedlicher Messanordnungen kann das Messergebnis auf oder für beide Seiten angezeigt werden. Durch diese Maßnahme kann ein metallischer Gegenstand bei einer untersuchten Person schneller gefunden werden.

In den Rahmen der Erfindung fällt außerdem eine Vorrichtung zur Detektion von metallischen Gegenständen im Beinbereich von bei Personenkontrollen zu untersuchenden Personen mit zwei sich gegenüber angeordneten Messanordnungen, wobei eine Messanordnung zumindest eine Sende- und eine Empfangseinrichtung aufweist und eine Messanordnung wenigstens eine Empfangseinrichtung aufweist, sowie mit zumindest einer Auswerteeinrichtung zur Auswertung zumindest einer Messung mit einer Sende- und einer Empfangseinrichtung derselben Messanordnung und einer Messung mit einer Sendeeinrichtung einer Messanordnung und einer Empfangseinrichtung der gegenüberliegenden Messanordnung. Vorzugsweise sind beide Messanordnungen identisch aufgebaut, d. h. beide weisen sowohl eine Sendeeinrichtung als auch eine Empfangseinrichtung auf. Dabei können die Sende- und Empfangseinrichtungen einer Messanordnung zu einer gemeinsamen Sende-/Empfangseinrichtung kombiniert sein und damit eine Einheit darstellen.

Bei einer besonders bevorzugten Ausführungsform kann eine Umschalteinrichtung zur Aktivierung von unterschiedlichen Sendeeinrichtungen, insbesondere von unterschiedlichen Paaren von Sende- und Empfangseinrichtungen, vorgesehen sein. Die Umschalteinrichtung kann insbesondere als Elektronik ausgebildet sein, die entsprechend dem gewünschten Messablauf die unterschiedlichen Sende- und Empfangseinrichtungen aktiviert und deaktiviert, wobei die Empfangseinrichtung(en) kurzzeitig nach einer Sendeeinrichtung aktiviert werden sollte(n).

Vorzugsweise ist mindestens eine mit der Auswerteeinrichtung verbundene Signalisierungseinrichtung vorgesehen. Somit kann beispielsweise ein Alarm ausgegeben werden, wenn Metall im Beinbereich einer zu kontrollierenden Person detektiert wird. Außerdem ist es denkbar, die Signalisierungseinrichtung(en) so auszubilden, dass das Messergebnis der Messanordnungen gemeinsam oder getrennt angezeigt werden kann.

Eine besonders einfache Ausgestaltung der Messanordnungen ergibt sich, wenn die Sendeeinrichtungen jeweils zumindest eine Sendespule und die Empfangseinrichtungen jeweils zumindest eine Empfangsspule umfassen.

Grundsätzlich ist es denkbar, die erfindungsgemäße Vorrichtung ortsfest und fest installiert einzusetzen. Vorteile ergeben sich jedoch, wenn die Vorrichtung während der Verwendung stationär an einem Einsatzort angeordnet und zwischen Einsatzorten transportierbar ist. Somit kann sie beispielsweise bei verschiedenen Großereignissen an verschiedenen Orten zur Personenkontrolle eingesetzt werden.

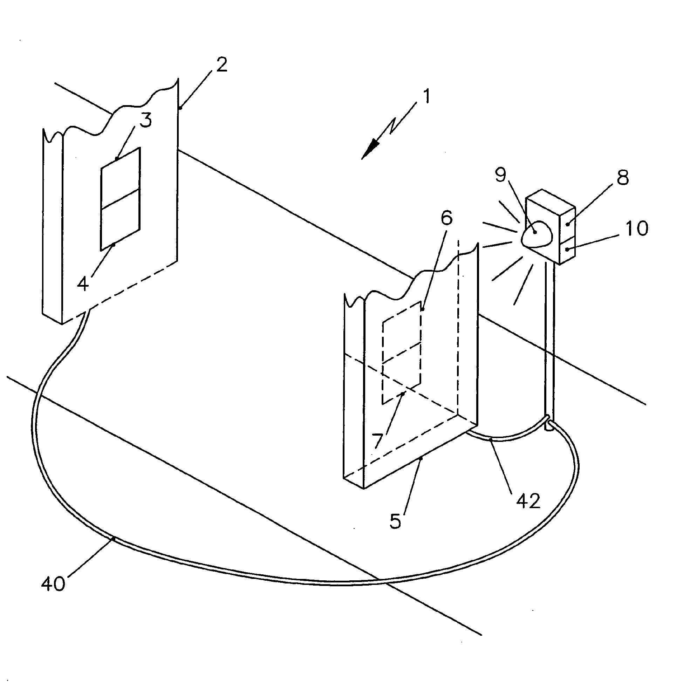

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt, welches in der nachfolgenden Beschreibung näher erläutert wird.

Die einzige Figur zeigt ein Ausführungsbeispiel einer erfindungsgemäßen Detektionsvorrichtung 1. Eine erste Messanordnung 2 umfasst eine Sendeeinrichtung 3 und eine Empfangseinrichtung 4. Eine gegenüber angeordnete zweite Messanordnung 5 umfasst ebenfalls eine Sendeeinrichtung 6 und eine Empfangseinrichtung 7. Beide Messanordnungen 2, 5 sind über Kabel 40, 42 mit einer Auswerteeinrichtung 8 verbunden. An der Auswerteeinrichtung 8 ist eine Signalisierungseinrichtung 9 angeordnet. Weiterhin ist eine eine Umschalteinrichtung umfassende Steuereinrichtung 10 vorgesehen, die den Messablauf steuert. Insbesondere wird dadurch gesteuert, zu welchen Zeitpunkten und in welcher Reihenfolge die Sendeeinrichtungen 3, 6 senden und die Empfangseinrichtungen 4, 7 empfangen.

Beispielsweise kann zur Detektion von Metallteilen zwischen den Messanordnungen 2, 5 zunächst die Sendeeinrichtung 3 senden und die Empfangseinrichtung 4 empfangen. Anschließend kann wiederum die Sendeeinrichtung 3 senden und die Empfangseinrichtung 7 empfangen. Daran anschließend kann die Sendeeinrichtung 6 senden und die Empfangseinrichtung 7 empfangen. Daran anschließend kann wiederum die Sendeeinrichtung 6 senden und die Empfangseinrichtung 4 empfangen. Dadurch wird der Raum zwischen den Messanordnungen 2, 5 optimal abgetastet. Es ist jedoch auch denkbar, dass zunächst die Sendeeinrichtung 3 sendet und dann die Empfangseinrichtungen 4, 7 gleichzeitig empfangen. Daran anschließend kann die Sendeeinrichtung 6 senden und können wiederum beide Empfangseinrichtungen 4, 7 empfangen. Die Signale der Empfangseinrichtungen 4, 7 werden in der Auswerteeinrichtung 8 ausgewertet. Die Messergebnisse, insbesondere wenn ein Metallteil zwischen den Messanordnungen 2, 5 detektiert wird, können über die Signalisierungseinrichtung 9 signalisiert werden.

## Patentansprüche

1. Verfahren zur Detektion von metallischen Gegenständen im Beinbereich von bei Personenkontrollen zu untersuchenden Personen mit zwei sich gegenüber angeordneten Messanordnungen (2, 5), wobei eine Messanordnung (2, 5) zumindest eine Sende- und eine Empfangseinrichtung (3, 4; 6, 7) aufweist und eine Messanordnung (2, 5) wenigstens eine Empfangseinrichtung (4, 7) aufweist, wobei zumindest eine Messung mit einer Sende- und einer Empfangseinrichtung (3, 4; 6, 7) derselben Messanordnung (2, 5) und eine Messung mit einer Sendeeinrichtung (3, 6) einer Messanordnung (2, 5) und einer Empfangseinrichtung (4, 7) der gegenüberliegenden Messanordnung (2, 5) durchgeführt werden.

2. Verfahren nach Anspruch 1, **dadurch gekennzeichnet, dass** Messungen mit der Sende- und Empfangseinrichtung (3, 4; 6, 7) derselben Messanordnung (2, 5) und mit einer Sendeeinrichtung (3, 6) einer Messanordnung (2, 5) und einer Empfangseinrichtung (4, 7) der gegenüberliegenden Messanordnung (2, 5) abwechselnd durchgeführt werden.

3. Verfahren nach einem der vorhergehenden Ansprüche, **dadurch gekennzeichnet, dass** die Empfangseinrichtung (4, 7) einer Messanordnung (2, 5) abwechselnd mit der Sendeeinrichtung (3, 6) derselben und der gegenüberliegenden Messanordnung (2, 5) zur Durchführung einer Messung aktiviert wird.

4. Verfahren nach einem der vorhergehenden Ansprüche, **dadurch gekennzeichnet, dass** mit Empfangseinrichtungen (4, 7) beider Messanordnungen (2, 5) gleichzeitig gemessen wird.

5. Verfahren nach einem der vorhergehenden Ansprüche, **dadurch gekennzeichnet, dass** die Messungen ausgewertet und/oder das Messergebnis signalisiert wird.

6. Verfahren nach einem der vorhergehenden Ansprüche, **dadurch gekennzeichnet, dass** bei einer Messung mit einer Sende- und Empfangseinrichtung (3, 4; 6, 7) derselben Messanordnung (2, 5) das Messergebnis auf oder für die Seite der Messanordnung (2, 5) angezeigt wird.

7. Verfahren nach einem der vorhergehenden Ansprüche, **dadurch gekennzeichnet, dass** bei einer Messung mit einer Sende- und Empfangseinrichtung (3, 7; 4, 6) unterschiedlicher Messanordnungen (2, 5) das Messergebnis auf oder für beide Seiten angezeigt wird.

8. Vorrichtung (1) zur Detektion von metallischen Gegenständen im Beinbereich von bei Personen kontrollen zu untersuchenden Personen mit zwei sich gegenüber angeordneten Messanordnungen (2, 5), wobei eine Messanordnung (2, 5) zumindest eine Sende- und eine Empfangseinrichtung (3, 4; 6, 7) aufweist und eine Messanordnung (2, 5) wenigstens eine Empfangseinrichtung (4, 7) aufweist, sowie mit zumindest einer Auswerteeinrichtung (8) zur Auswertung zumindest einer Messung mit einer Sende- und einer Empfangseinrichtung (3, 4; 6, 7) derselben Messanordnung (2, 5) und einer Messung mit einer Sendeeinrichtung (3, 6) einer Messanordnung (2, 5) und einer Empfangseinrichtung (4, 7) der sich gegenüberliegenden Messanordnung (2, 5).

9. Vorrichtung nach Anspruch 8, **gekennzeichnet durch** eine Umschalteinrichtung zur Aktivierung von unterschiedlichen Sendeeinrichtungen (3, 6), insbesondere von unterschiedlichen Paaren von Sende- und Empfangseinrichtungen (3, 4; 6, 7).

10. Vorrichtung nach Anspruch 8 oder 9, **dadurch gekennzeichnet, dass** mindestens eine mit der Auswerteeinrichtung (8) verbundene Signalisierungseinrichtung (9) vorgesehen ist.

11. Vorrichtung nach einem der Ansprüche 8 bis 10, **dadurch gekennzeichnet, dass** die Sendeeinrichtungen (3, 6) jeweils zumindest eine Sendespule und die Empfangseinrichtungen (4, 7) jeweils zumindest eine Empfangsspule umfassen.

12. Vorrichtung nach einem der vorhergehenden Ansprüche 8 bis 11, **dadurch gekennzeichnet, dass** die Vorrichtung (1) während der Verwendung stationär an einem Einsatzort angeordnet und zwischen Einsatzorten transportierbar ist.
